(19)

Europäisches
Patentamt
European
Patent Office
Office européen
des brevets

(11)  **EP 3 360 721 A1**

(12)  # EUROPEAN PATENT APPLICATION

(43) Date of publication:
**15.08.2018  Bulletin 2018/33**

(51) Int Cl.:
**B60L 11/18** (2006.01)    **G07C 5/00** (2006.01)

(21) Application number: **18156019.4**

(22) Date of filing: **09.02.2018**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA MD TN** | • **Monnier, Bernard<br>2000 Neuchâtel (CH)**<br><br>(72) Inventors:<br>• **Pardoen, Matthijs<br>2000 Neuchâtel (CH)**<br>• **Monnier, Bernard<br>2000 Neuchâtel (CH)** |
| (30) Priority: **09.02.2017   US 201762456750 P** | (74) Representative: **Leach, James<br>Mewburn Ellis LLP<br>City Tower<br>40 Basinghall Street<br>London EC2V 5DE (GB)** |
| (71) Applicants:<br>• **Pardoen, Matthijs<br>2000 Neuchâtel (CH)** | |

(54)  **METERING VEHICLE ELECTRICITY CONSUMPTION FOR VARIABLE TAX COLLECTION**

(57)    A power consumption metering device (100) for a vehicle that utilizes electrical energy from an external source has a power metering circuit (120) coupled to a main power cable between a power charging port and an energy store of the vehicle to measure voltage and current from the external source, a communications module (140) for data communication, and a controller (130) with a processor and a memory (132) and coupled to the power metering circuit and the communication module.

The memory stores instructions that cause the controller to obtain a measurement of the voltage and current integrated over time to determine data for an amount of energy consumed during power charging, store the data for the amount of energy consumed in the memory, establish a communication link with a tax assessment application executing on a client device, and transfer the data for the amount of energy consumed to the tax assessment application.

Figure 1

**Description**

**CROSS REFERENCE TO RELATED APPLICATIONS**

This application claims the benefit of U.S. Provisional Patent Appl. No. 62/456,750 for "System and Method for Metering Vehicle Electricity Consumption for Variable Tax Collection" filed February 9, 2017, herein incorporated by reference in its entirety for all purposes.

**BACKGROUND**

Today, in many jurisdictions, vehicle and vehicle usage is taxed for the purpose of paying for infrastructure like roads and bridges, etc. Often, taxes on vehicles consist of a fixed component related to vehicle ownership like registration tax, yearly license plate tax and mandatory stickers. There is also typically a variable tax component, such as road tolls and taxes on fuel. The latter two are more proportional to the vehicle usage and the miles the vehicle has been driving. The more ones drives, the more roads are used and the more the driver contributes to road infrastructure building and maintenance. This tax collection scheme is simple, fraud insensitive and provides an incentive to design better fuel or energy efficient vehicles.

Also, it is common to discriminate between types of usage for fuel by using different tax rates for different types of use. For example, tax on diesel fuel used in vehicles is not the same as tax on heating fuel. In order to reduce tax avoidance, some countries have added a color to the heating fuel to avoid people using heating fuel in their vehicles.

**SUMMARY**

According to one aspect of the present invention, an example of a power consumption metering device for a vehicle configured to utilize electrical energy from an external source includes a power metering circuit configured to be electrically coupled to a main power cable of a vehicle between an external power charging port of the electrical vehicle and an energy store of the vehicle and configured to measure voltage and current on the main power cable from the external source. The system also includes a communications module configured for data communication. And a controller is coupled to the power metering circuit and the communication module, the controller including a processor and a memory, with machine executable instructions stored in the memory that, when executed by the processor, cause the controller to obtain a measurement of the voltage and current integrated over time to determine data for an amount of energy consumed during power charging, store the data for the amount of energy consumed in the memory, using the communications module, establish a communication link with a tax assessment application executing on a client device, and responsive to establishing the communication link with the tax assessment application, transfer the data for the amount of energy consumed to the tax assessment application.

According to another aspect of the present invention, an example of a computer-implemented method for metering power consumption for a vehicle configured to utilize electrical energy from an external source calls for measuring voltage and current between an external power charging port of an electrical vehicle and an energy store of the vehicle, integrating the measured voltage and current over time to determine data for an amount of energy consumed during power charging, and storing the data for the amount of energy consumed. The method also calls for establishing a communication link with a tax assessment application and, responsive to establishing the communication link with the tax assessment application, transferring the data for the amount of energy consumed to the tax assessment application.

**BRIEF DESCRIPTION OF THE DRAWINGS**

Various embodiments in accordance with the present disclosure will be described with reference to the drawings, in which:

Figure 1 is a schematic diagram depicting an example of a vehicle electrical consumption device in accordance with certain aspects of the present invention;
Figure 2 is a schematic diagram depicting an example of the on-board computer system of Figure 1;
Figure 3 is a schematic diagram depicting an example of the vehicle electrical consumption module of Figure 1 installed in a vehicle;
Figure 4 is a schematic diagram depicting an example of the system of Figure 3, where the computer system is a mobile telephone that is running a tax assessment application;
Figure 5 is a schematic diagram illustrating another example of the system of Figure 3, where the computer system is a personal computer running a tax assessment application;
Figure 6 is an architecture diagram illustrating an example of the operation and communication with a tax assessment server in the present system;

Figure 7 is a functional block diagram illustrating one example of the vehicle electrical consumption module of Figure 1;

Figure 8 is a control flow diagram illustrating one example of a process in the controller of the consumption module of Figure 7;

Figure 9 is a control flow diagram illustrating one example of a fraud and fault detection process in the controller of the consumption module of Figure 7;

Figure 10 is a control flow diagram illustrating an example of a process in the tax assessment server of Figures 1, 3 and 6; and

Figure 11 depicts aspects of elements that may be present in a computer device and/or system configured to implement a method, system and/or process in accordance with some embodiments of the present invention.

Note that the same or similar numbers are used throughout the disclosure and figures to reference like components and features.

## DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

When it comes the electric vehicles or plug in hybrid vehicles, today, the user is practically not taxed in a variable way as the driver can charge his vehicle at home and the user pays taxes that are the same as the ones applied for use in the home. Those taxes are typically low compared to the taxes levied on gasoline. One also can generate his energy from solar panels for example. In that case there is no tax levied at all.

Many countries today accept reduced taxing of electric vehicles as this gives an incentive to increase the proportion of electric vehicles on their roads. They are more energy efficient and hence good to reduce overall $CO_2$ pollution.

However, as the electric vehicle replaces the existing gasoline vehicle base, the taxing bodies will receive significantly less tax revenue. Sooner or later, taxing bodies will seek alternative ways to increase their tax revenues to compensate for this effect.

A simple way to avoid tax revenue erosion caused by a diminishing gasoline vehicle base can be implemented by applying a higher fixed annual fee for electric vehicles and plug-in hybrids. Some states actually today apply extra registration fees, reduce tax credits and ponder on applying annual fees. However, fixed taxes do not reflect infrastructure usage and it would be preferable if a variable tax scheme could be applied to electric vehicles that is similar to that applied to gasoline powered vehicles.

One proposed approach is the Oregon Mileage Fee Concept as described in "Oregon's Mileage Fee Concept and Road User Fee Pilot Program, Final Report", November 2007, James M. Whitty. This approach tries to introduce a variable tax component to take into account the miles driven and apply a rate depending on zones. Payment is then initiated at a pump or charge station, sometimes called a Point of Sale (POS). There are several potential issues with this system: It eliminates an important incentive to drive energy efficient vehicles as one only looks at mileage. The system is costly and difficult to retrofit, as a device has to connect to the odometer inside the vehicle. Moreover, hardware needs to be installed at all POS stations to receive and report vehicle usage information. Furthermore, the payment at a fuel pump POS is only relevant for gasoline powered vehicles. Reliance on charging station POS implementation may be ineffective because electric vehicles can be charged at home or other private places such that the vehicle may not need to visit a POS charging station. Also, there may be difficulty in connecting to a tax processing system at the POS, which may occur frequently with wireless systems, such as radio frequency (RF) systems. Therefore, it potentially lacks robustness and may be burdensome for users. Also, such a system may be vulnerable to fraud if odometers can sometimes be compromised.

United States Patent Publication no. 2009/0177580 describes another method of collecting tax for electric vehicles at a charging station POS. After communicating to a tax server, the taxes can be applied directly together with the costs of the charging electricity. This approach is the gasoline pump equivalent of an electricity charging station. This approach also suffers from the shortcoming that it may be bypassed by an electric vehicle owner with a garage at home or any other place that has an electrical outlet the permits the vehicle owner to charge the vehicle practically tax free or at tax rates that do not reflect usage of public infrastructure.

One object of the present approach is to collect vehicle usage tax for vehicles that use electricity regardless of the electricity source used for charging. In one example in accordance with certain aspects of the present approach, a device is installed in a vehicle and no infrastructure changes at the POS may be necessary.

A power meter module attached to the electric vehicle plug meters and stores in memory the electrical energy charged. As the charging locations may be in different tax zones (countries, states, regions etc.), the zone of the charging location may also be stored in some examples. In one example, the user can establish, using his own computer or mobile phone on which a user interface and tax assessment application is installed, an internet connection to the tax body controlled/owned server (tax server) 400. The information containing the tax zone, electrical energy charged together with a unique vehicle identification number (VIN) can now be communicated, preferably using encryption. The taxing body can then invoice the vehicle owner and can use the vehicle owner information on record for the fixed tax component or vehicle registration.

In some examples, to address privacy concerns, it is not necessary to communicate precise date stamps and precise location information of the charging point to the tax server. However, this information can be useful to the vehicle owner. In some examples, the system is configured to make that information available using the user interface tax assessment application.

It could well be that some drivers do not want to communicate anything to a tax server or retrofit the vehicle with the system. In that case the taxing body can just apply a fixed tax rate. Ideally this should then be high enough to incite the vehicle owner to connect to the tax server.

When crossing regions or countries that apply different tax rates, as the tax server has information about the different regions the vehicle was in when charging took place, it can transfer the tax collected from the vehicle owner to these regions. This can be done anonymously, to avoid privacy concerns.

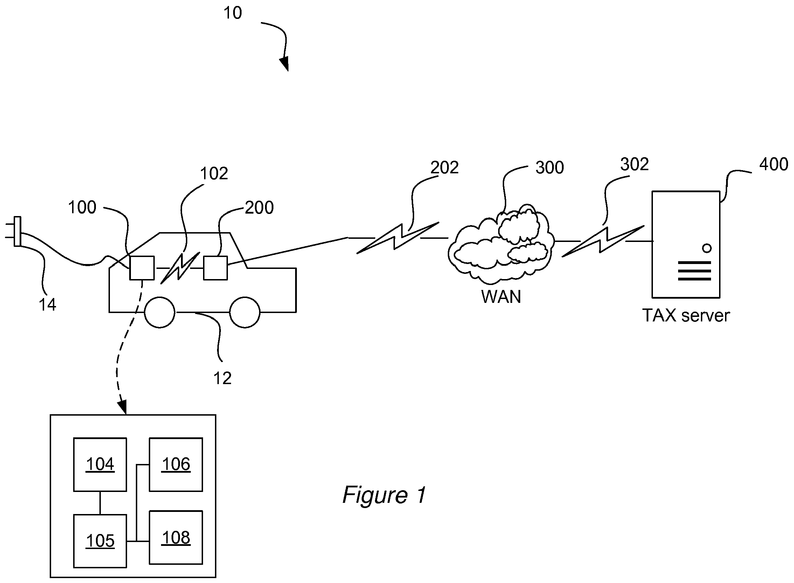

Figure 1 is a schematic diagraming illustrating one example of an implementation of a vehicle electrical consumption device 100 installed in a vehicle 12 and electrically coupled to a charging system of the vehicle, e.g. a power charging cable 14, in order to monitor electrical consumption when the vehicle 12 is connected to a power source for charging the vehicle's batteries. The vehicle electrical consumption device 100 in this example includes a power metering circuit 104, a communication module 106 and Global Position System (GPS) module 108.

In this example, which utilizes an on-board computer system 200 also located in the vehicle, the communication module 106 of consumption device 100 establishes a communication link 102 with the on-board communication system 200, which is running a tax assessment application for communicating with the communications module of vehicle electrical consumption device 100. The on-board computer system 200 also includes a communications module that provides a communication link 202 to Wide Area Network WAN (300), which may be the Internet. Communication link 202 may be wireless or wired, such as links using Ethernet, Wi-Fi or Mobile Data Communication standards for example. Communication link 102 to the on-board computer system 200 may be wired or wireless, such as links using Near Field Communication (NFC), Bluetooth or Wi-Fi standards for example.

The tax assessment application 210 running upon on-board computer system 200 is configured to obtain electrical consumption information from electrical consumption device 100, such as the amount of electrical power used in charging, the date when charging was performed, and the location of the vehicle when charging was performed. The tax assessment application 210 then communicates with tax server 400 via WAN 300 to transfer the electrical consumption information along with identifying data, such as Vehicle Identification Number (VIN) and vehicle owner account information, for processing a variable tax assessment for the vehicle.

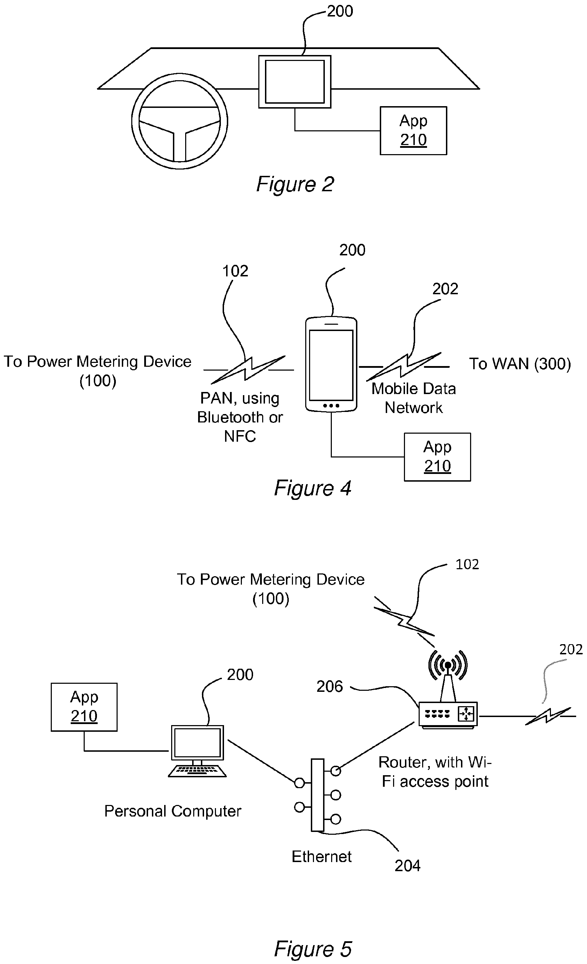

Figure 2 is a schematic diagraming illustrating an example of the on-board computer system 200 of Figure 1 installed in a vehicle dashboard, such as the in-dash computer system found in many late model vehicles, which hosts the tax assessment application 210 and communicates with WAN 300 via a Mobile Data Communication link 202.

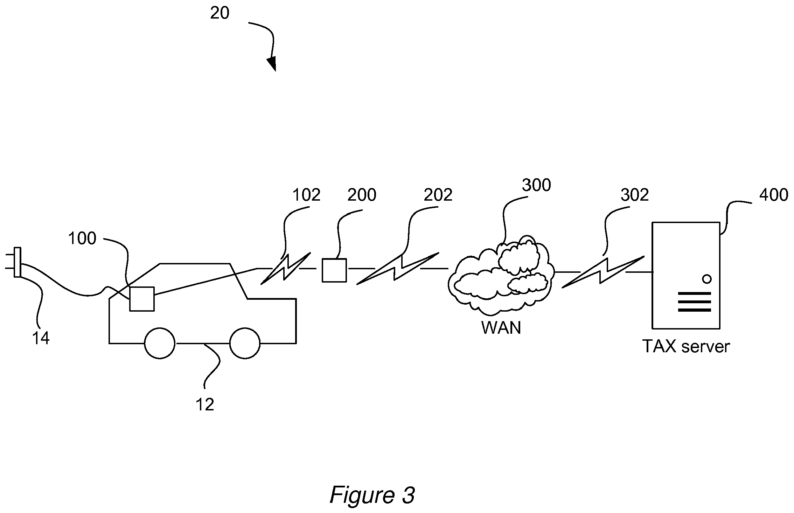

Figure 3 is a schematic diagraming illustrating another example 20 of an implementation of a vehicle electrical consumption device 100 installed in a vehicle, but does not rely on an on-board computer system. In this example, computer system 200 is separate from the vehicle, such as a smart phone, tablet or person computer, the tax assessment application 210 executes on the computer system 200, and the vehicle electrical consumption device 100 installed in the vehicle communicates with the computer system 200 via a wired or wireless communication link 102, such as a peer-to-peer connection using Near Field Communication (NFC) or Bluetooth, a Personal Area Network (PAN), or local area network (LAN) using Ethernet or Wi-Fi standards.

Figure 4 is a schematic diagram illustrating one example of the system shown in Figure 3. In this example, computer system 200 of Figure 3 is a mobile telephone, e.g. a smart phone, which is running tax assessment application 210. In this example, mobile telephone 200 communicates with vehicle electrical consumption device 100 through link 102 using, for example, NFC, Bluetooth or WiFi. The smart phone 200 is in communication with WAN 300 via a mobile data network using the phone's data connection 202.

Figure 5 is a schematic diagram illustrating another example, where the computer system 200 of Figure 3 is a personal computer running tax assessment application 210. In this example, personal computer 200 is connected to a router or wireless access point 206 through an Ethernet link 204 and uses a Wi-Fi connection 102 to communicate with vehicle electrical consumption device 100. The personal computer 200 is in communication with WAN 300 also via the Wi-Fi router. For example, when the vehicle is in the owner's garage, the consumption device 100 attempts to establish a connection via the wireless router with the tax assessment application running on the personal computer 200. The tax assessment application 210 collects the usage data from the consumption device 100, establishes a connection with tax processing server 400, and communicates the usage data from the consumption device 100 to the tax processing server 400.

Note that this approach may, in some examples, be implemented relatively simply and at low cost by installing the electrical consumption device 100, which may be a relatively low cost device, in a vehicle to measure the charged energy and installing the tax assessment application in a personal computer, phone or other device. The module may use a VIN number or other unique identifier associated with the vehicle, which may be stored in memory on the device 100 and transferred to the tax assessment application. It may also use the geo-location of the charging point to determine the tax region. Some examples may utilize a user initiated internet connection or can allow for an automated connection to the tax server. Various implementations of the consumption module may be designed for relatively simple retrofitting of existing vehicles or built into the vehicle by the original manufacturer. It should be noted that many of the hardware components, such as an on-board computer, described herein are available in a modern car today, so the car manufacturer only has to add the power metering hardware and adapt software to establish the transfer of data to the tax server. It may then be envisioned that the car can have its own automatic connection at periodic intervals to the tax server.

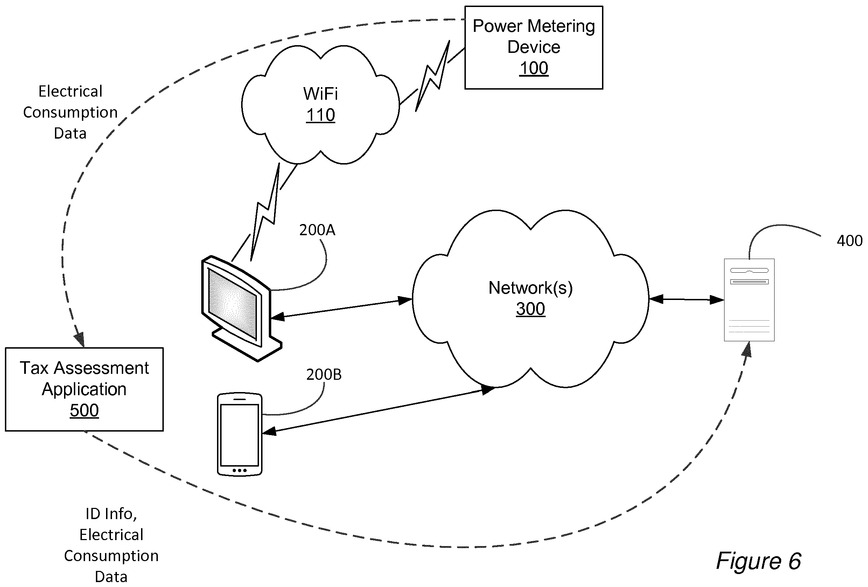

Figure 6 is an architecture diagram illustrating an example of the operation of the present system. A tax assessment application 500 runs on a user device, such as personal computer 200A or smart phone 200B. The tax assessment application 500 or the controller in consumption device 100 establishes a connection through WiFi network 110. The electrical consumption data stored in memory on consumption device 100 is transferred to the tax assessment application 500. The tax assessment application 500 establishes communication with tax processing server 400 through wide area network 300. The communication link between tax assessment application 500 and tax processing server 400 is preferably secure. The electrical consumption data from the consumption device 100 is then transferred to the tax processing server 400 by tax assessment application 500. The data transferred will include identifying information, such as a VIN, which may be provided in the course of a secure login procedure involving application 500 and server 400.

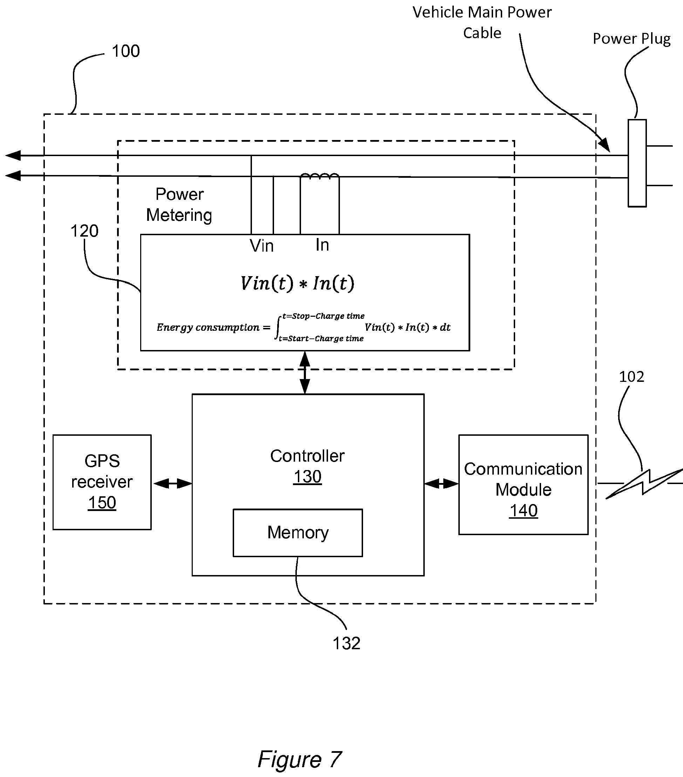

Figure 7 is a functional block diagram illustrating one example of the vehicle electrical consumption device 100 discussed above. In this example, device 100 includes a power metering circuit 120 that is electrically coupled to a main power cable of the vehicle that connects the vehicle's battery and charging circuitry to an electrical power plug. The power metering circuit 120 may be implemented using electro mechanical techniques or integrated circuits. For example, a variety of conventional power metering circuits available from ANALOG DEVICES, TEXAS INSTRUMENTS or ST MICROELECTRONICS that measure single phase, poly phase or DC power may be adapted for use as the power metering circuit 120 in examples of the electrical consumption device 100. For examples involving multiple phase power systems, the power metering circuit generally sums the integration of multiple voltages and current over time to measure energy. One example of this approach is the AD9000 power quality monitoring circuit from ANALOG DEVICES. Those of ordinary skill in the art will readily recognize that a variety of approaches may be utilized for different systems having different power characteristics and that the function of the power metering circuit is adapted to those power characteristics.

The power metering circuit 120 monitors the voltage and current on the main power cable in order to determine energy consumption. In this example, the power metering circuit 120 operates by integrating the observed voltage and current over time according to the following equation:

$$Energy\ consumption = \int_{t=Start-Charge\ time}^{t=Stop-Charge\ time} Vin(t) * In(t) * dt$$

A controller 130 receives and stores the power consumption readings from the power metering circuit 120 in memory 132 along with, in this example, location data received from a GPS receiver 150. The controller 130 then attempts to use a communication module 140 to communicate with a tax assessment application via communication link 102 as previously discussed. The controller 130 may also store time data and VIN in memory 132 along with the consumption data.

Note that, in some implementations, a vehicle battery can be used as a power source, such as a power source for a house. In such implementations, the vehicle battery may discharge and the energy transfer from the vehicle battery may be monitored and subtracted from the measured power consumption communicated to the tax assessment application.

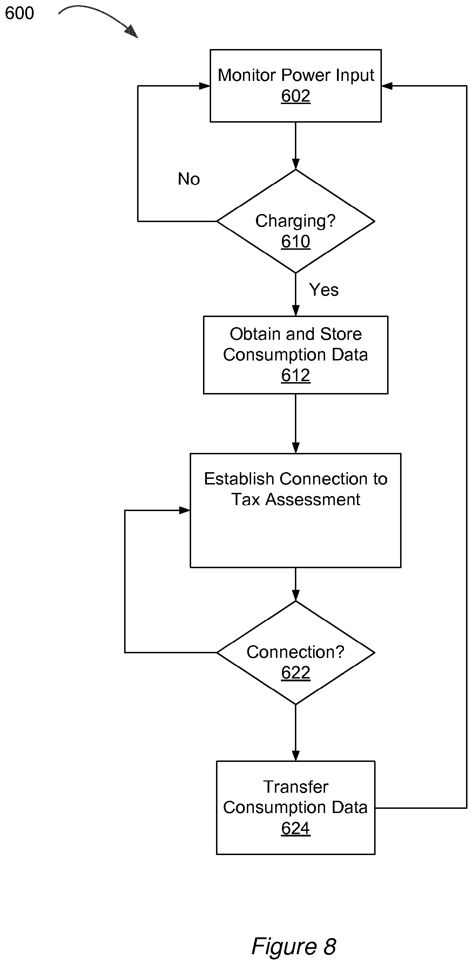

Figure 8 is a control flow diagram illustrating one example of a process 600 in the controller of consumption device 100. In this example, at 602, the controller 130 periodically monitors the power metering circuit 120 to detect whether the vehicle battery is being charged or discharged. If charging or discharging is detected, then control flow branches at 610 to 612, where the consumption data, e.g. power level, duration, etc., is obtained from the power metering circuit and stored in memory 132. The stored data may also include time stamp and geo-location information associated with the charging.

At 620, controller 130 uses communication circuit 150 to establish a connection to communicate with tax assessment application 500. For example, when the vehicle is at the user's home, controller 130 may establish a WiFi link on the user's home network to a personal computer running tax assessment application 500. If a connection is established with tax assessment application 500, then, at 624, the consumption data stored in memory 132 is transferred to the application 500.

In some examples, the controller 130 in the consumption device 100 is coded to perform fraud detection. For example, if the consumption module is powered from the vehicle battery, then it may be possible to disconnect or otherwise deprive the module of power. Fraud or failure checks can detect such tampering or module failure. For example, the controller may operate to detect that voltage is present, but no current for a prolonged period or that current is present, but no voltage is present.

In another example, the controller may be coded to detect whether the user has disconnected the consumption device 100 from the battery to charge the battery and avoid power metering and then reconnected the module. The controller may use a real time clock supplied by the GPS module to periodically check whether a supply voltage from the battery is present and store the supply voltage present indicator in memory along with a time stamp. If the battery is disconnected from the consumption module, then the controller will detect the time period during which the battery was disconnected.

The controller may also be coded to perform diagnostics. If no voltage and no current is present for a prolonged time, the module can diagnose itself to detect if wires are cut by applying a voltage at different times and measuring the current to detect if there is a load. A fault diagnosis word may be stored in memory to indicate the fault status.

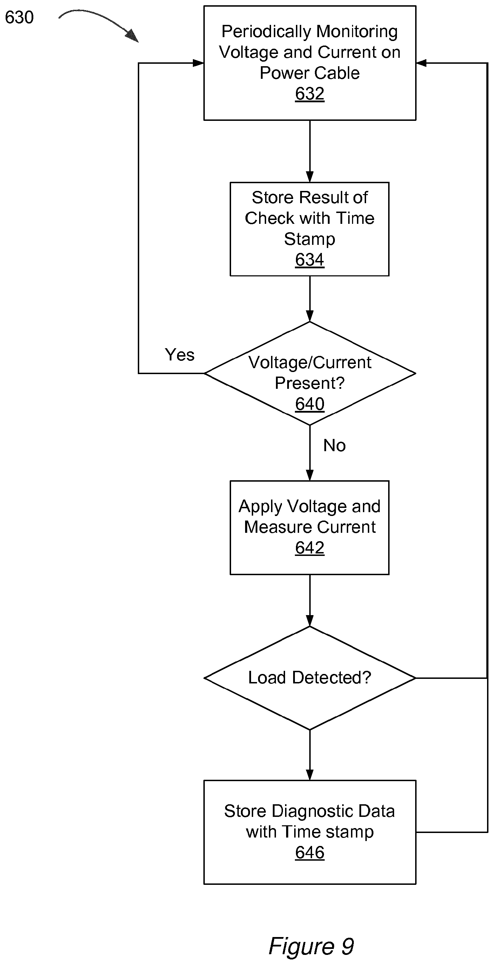

Figure 9 is a control flow diagram illustrating one example of a fraud and fault detection process 630 running in controller 130. At 632, the controller 130 periodically checks the voltage and current levels on the vehicle power cable as measured by the power metering circuit 120 and, at 634, stores the results of the check in memory 132 along with a time stamp for when the check was performed. At 640, the controller checks power metering circuit 120 to determine if voltage or current is present. If no voltage or current is present for a predetermined period of time, then, at 642, controller 130 tests for the presence of a load by causing power metering circuit 120 to apply a voltage to the vehicle power cable and measuring the resulting current. If a load is detected, then control returns to 632. If no load is detected, then, at 646, the controller 130 stores the diagnostic data, e.g. duration of time when no load was detected, along with a time stamp in memory 132.

The fault and fraud detection data stored in memory 132 may be reported to the tax server 400 when a connection is re-established. The tax authority can then be notified by tax processing server 400 to take action, such as to call in the car for inspection and/or start to charge the fixed rate tax. It also can reset the fault detection, off line time and diagnosis code words after the user or verification center indicates that the module is fixed.

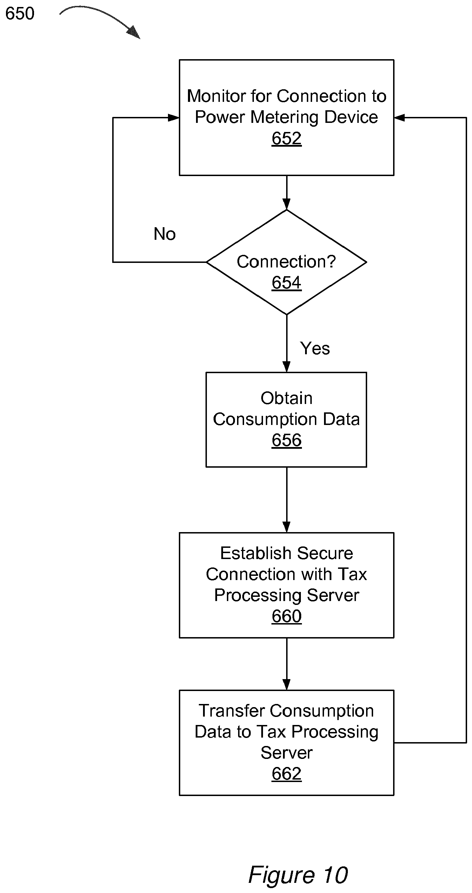

Figure 10 is a control flow diagram illustrating an example of a process 650 in tax assessment application 500. At 652, tax assessment application 500 periodically monitors the communication link of its host device, e.g. a personal computer or smart phone, to determine if a connection to consumption device 100 is available. If no connection is found, then the application returns to 652 to continue checking for the presence of the consumption meter.

If, at 654, a connection is detected, then, at 656, tax assessment application 500 obtains the consumption data stored in the memory of consumption device 100. At 660, tax assessment application 500, using the Internet connection of its host device, establishes a secure connection with tax processing server 400. At 662, the application transfers the consumption data obtained from the consumption device 100 to the tax processing server so that variable usage tax may be assessed based on the measured energy consumption. The data obtained from the consumption device 100 and transferred to tax assessment server 400 may include the fraud and fault data discussed above.

Another use case for the system and method described herein is for car rental or loan. For example, car rental agencies or similar businesses, where the user of the car may be contractually required to pay the tax on energy consumption, the system may make available the electricity usage between a start and stop date/time. The rental company can then add the usage tax to the user bill. In one approach, a special user application for rental agencies is provided, so that after returning the car, the connection may be made with the tax server to determine the payable amount using the interface application. Then the car rental agency can add the tax amount to the final customer invoice.

Another use case involves sale of a vehicle. On the date of sale or registration, the tax processing application establishes communication with the consumption module in the vehicle to obtain the last usage reading. Communication is also established from the tax processing application to the tax server in order to transmit the last usage reading for the seller of the vehicle

One of ordinary skill in the art will recognize that other power metering approaches may be utilized without departing from the teaching of the present approach.

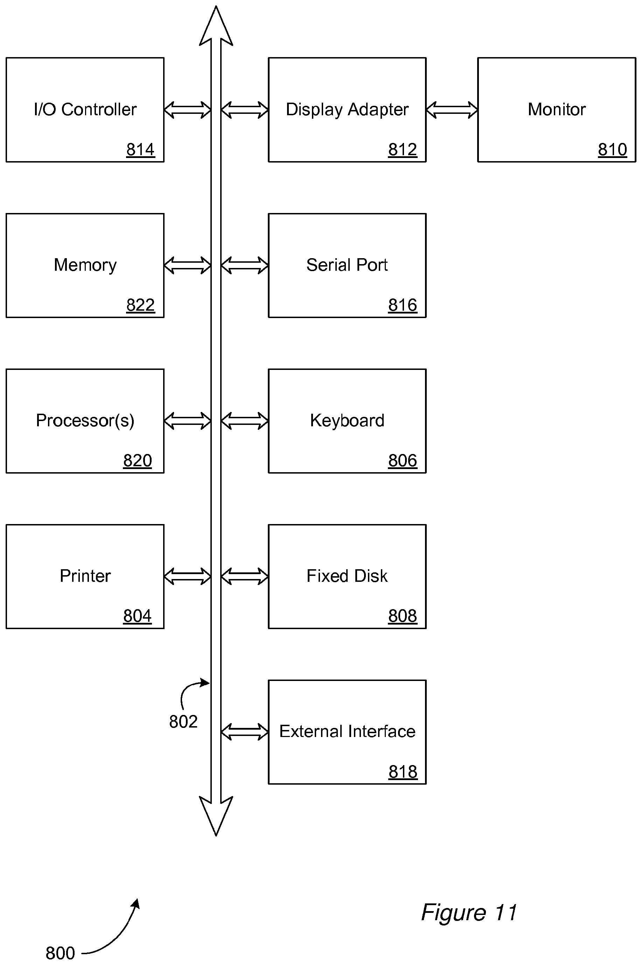

Figure 11 depicts aspects of elements that may be present in a computer device and/or system configured to implement a method, system and/or process in accordance with some embodiments of the present invention.

In accordance with at least one embodiment of the invention, the system, apparatus, methods, processes and/or operations for providing access to a proximate device from a mobile device may be wholly or partially implemented in the form of a set of instructions executed by one or more programmed computer processors, such as a central processing unit (CPU) or microprocessor. Such processors may be incorporated in an apparatus, server, client or other computing device operated by, or in communication with, other components of the system.

As an example, Figure 11 depicts aspects of elements that may be present in a computer device and/or system 800 configured to implement a method and/or process in accordance with some embodiments of the present invention. The subsystems shown in Figure 20 are interconnected via a system bus 802. Additional subsystems include a printer 804, a keyboard 806, a fixed disk 808, and a monitor 810, which is coupled to a display adapter 812. Peripherals and input/output (I/O) devices, which couple to an I/O controller 814, can be connected to the computer system by any number of means known in the art, such as a serial port 816. For example, the serial port 816 or an external interface 818 can be utilized to connect the computer device 800 to further devices and/or systems not shown in Figure 9 including a wide area network such as the Internet, a mouse input device, and/or a scanner. The interconnection via the system bus 802 allows one or more processors 820 to communicate with each subsystem and to control the execution of instructions that may be stored in a system memory 822 and/or the fixed disk 808, as well as the exchange of information between subsystems. The system memory 822 and/or the fixed disk 808 may embody a tangible computer-readable medium.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components, processes or functions described in this application may be implemented as software code to be executed by a processor using any suitable computer language such as, for example, Java, C++ or Perl or using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

All references, including publications, patent applications, and patents, cited herein are hereby incorporated by reference to the same extent as if each reference were individually and specifically indicated to be incorporated by reference and/or were set forth in its entirety herein.

The use of the terms "a" and "an" and "the" and similar referents in the specification and in the following claims are to be construed to cover both the singular and the plural, unless otherwise indicated herein or clearly contradicted by context. The terms "having," "including," "containing" and similar referents in the specification and in the following claims are to be construed as open-ended terms (e.g., meaning "including, but not limited to,") unless otherwise noted. Recitation of ranges of values herein are merely indented to serve as a shorthand method of referring individually to each separate value inclusively falling within the range, unless otherwise indicated herein, and each separate value is incorporated into the specification as if it were individually recited herein. All methods described herein can be performed in any suitable order unless otherwise indicated herein or clearly contradicted by context. The use of any and all examples, or exemplary language (e.g., "such as") provided herein, is intended merely to better illuminate embodiments of the invention and does not pose a limitation to the scope of the invention unless otherwise claimed. No language in the specification should be construed as indicating any non-claimed element as essential to each embodiment of the present invention.

Different arrangements of the components depicted in the drawings or described above, as well as components and steps not shown or described are possible. Similarly, some features and subcombinations are useful and may be employed without reference to other features and subcombinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications can be made without departing from the scope of the invention.

The disclosure presented herein also includes the subject matter set forth in the following clauses.

Clause 1: A power consumption metering device for a vehicle configured to utilize electrical energy from an external source, the system comprising: a power metering circuit configured to be electrically coupled to a main power cable of a vehicle between an external power charging port of the electrical vehicle and an energy store of the vehicle and configured to measure voltage and current on the main power cable from the external source; a communications module configured for data communication; a controller coupled to the power metering circuit and the communication module, the controller including a processor and a memory, the memory having stored therein machine executable instructions that, when executed by the processor, cause the controller to: obtain a measurement of the voltage and current from the power metering circuit integrated over time to determine data for an amount of energy consumed during power charging, store the data for the amount of energy consumed in the memory, using the communications module, establish a communication link with a tax assessment application executing on a client device, and responsive to establishing the communication link with the tax assessment application, transfer the data for the amount of energy consumed to the tax assessment application.

Clause 2: The power consumption metering device of clause 1, the memory having further stored therein machine executable instructions that, when executed by the processor, cause the controller to: periodically monitor the power metering circuit to detect voltage and current on the main power cable, if no voltage and current is detected on the main power cable, store data in memory indicating that no voltage and current was detected with an associated time stamp indicating when no voltage and current was detected, and the transfer of the data for the amount of energy consumed includes transfer of the data indicating no voltage and current was detected and the associated time stamp to the tax assessment application.

Clause 3: The power consumption metering device of any of the above clauses, the memory having further stored therein machine executable instructions that, when executed by the processor, cause the controller to: responsive to detecting that no voltage and current is detected on the main power cable, determining a presence of a load on the main power cable by causing the power metering circuit to apply a voltage to the main power cable and measure a resulting current on the main power cable, if no load is detected on the main power cable, store data in memory indicating that no load was detected with an associated time stamp indicating when no load was detected, and the transfer of the data for the amount of energy consumed includes transfer of the data indicating no load was detected and the associated time stamp to the tax assessment application.

Clause 4: The power consumption metering device of any of the above clauses, the system further including a global positioning system module and the memory having further stored therein machine executable instructions that, when executed by the processor, cause the controller to: when power charging is detected, obtain geolocation data from the global positioning system module, store the geolocation data with the data for the amount of energy consumed in the memory, and the transfer of the data for the amount of energy consumed includes transfer of the geolocation data along with the data for the amount of energy consumed to the tax assessment application.

Clause 5: The power consumption metering device of any of the above clauses, the system further including the client device, the client device having a processor, a memory, and a communication module, the client device memory having stored therein machine executable instructions for the tax assessment application that, when executed by the client device processor, cause the client device processor to: using the client device communications module, establish the communication link to the controller coupled to the power metering circuit; receive from the controller coupled to the power metering circuit the data for the amount of energy consumed; using the client device communications module, establish a communication link to a tax processing server; and transfer the data for the amount of energy consumed to the tax processing server.

Clause 6: The power consumption metering device of any of the above clauses, where the instructions stored in the client device memory that cause the client device processor to establish the communication link to the tax processing server include instructions that cause the communication link to the tax processing server to be secure.

Clause 7: The power consumption metering device of any of the above clauses, where the instructions stored in the client device memory include instructions that cause the client device processor to transfer a Vehicle Identification Number (VIN) to the tax processing server.

Clause 8: The power consumption metering device of any of the above clauses, where the controller coupled to the power metering circuit and the client device processor are combined in a single device.

Clause 9: The power consumption metering device of any of the above clauses, where the power metering circuit is installed in a vehicle and a Vehicle Identification Number (VIN) is stored in the memory of the controller coupled to the power metering circuit and the VIN is transferred to the tax assessment application with the data for the amount of energy consumed.

Clause 10: The power consumption metering device of any of the above clauses, where the power metering circuit is configured to measure charged electrical energy.

Clause 11: The power consumption metering device of any of the above clauses, where the power metering circuit is configured to measure charged electrical energy by integrating the voltage on the main power cable over time and multiplying the integrated voltage by the current.

Clause 12: The power consumption metering device of any of the above clauses, where the power metering circuit is configured to measure polyphase power by summing the measured energy for each phase of the polyphase power.

Clause 13: The power consumption metering device of any of the above clauses, the memory having stored therein machine executable instructions that, when executed by the processor, cause the controller to: obtain a measurement of the voltage and current integrated over time to determine data for an amount of energy discharged during power discharging, store the data for the amount of energy discharged in the memory, and subtract the amount of energy discharged from the amount of energy consumed.

Clause 14: A computer-implemented method for metering power consumption for a vehicle configured to utilize electrical energy from an external source, the method comprising: measuring voltage and current between an external power charging port of an electrical vehicle and an energy store of the vehicle; integrating the measured voltage and current over time to determine data for an amount of energy consumed during power charging; storing the data for the amount of energy consumed; establishing a communication link with a tax assessment application; and responsive to establishing the communication link with the tax assessment application, transferring the data for the amount of energy consumed to the tax assessment application.

Clause 15: The computer-implemented method for metering power consumption of clause 14, the method including: periodically monitoring the power metering circuit to detect voltage and current between the external power charging port and the energy store of the vehicle; if no voltage and current is detected, storing data in memory indicating that no voltage and current was detected with an associated time stamp indicating when no voltage and current was detected; and the transferring the data for the amount of energy consumed operation includes transferring the data indicating no voltage and current was detected and the associated time stamp to the tax assessment application.

Clause 16: The computer-implemented method for metering power consumption of any of the above clauses, the method including: responsive to detecting that no voltage and current is detected on the main power cable, determining a presence of a load between the external power charging port and the energy store of the vehicle; if no load is detected, storing data in memory indicating that no load was detected with an associated time stamp indicating when no load was detected; and the transferring the data for the amount of energy consumed operation includes transferring the data indicating no load was detected and the associated time stamp to the tax assessment application.

Clause 17: The computer-implemented method for metering power consumption of any of the above clauses, the method including: obtaining geolocation data when power charging is detected; storing the geolocation data with the data for the amount of energy consumed in the memory; and the transferring the data for the amount of energy consumed operation includes transferring the geolocation data along with the data for the amount of energy consumed to the tax assessment application.

Clause 18: The computer-implemented method for metering power consumption of any of the above clauses, the method including: receiving the data for the amount of energy consumed in the tax assessment application; establishing a communication link between the tax assessment application and a tax processing server; and transferring the data for the amount of energy consumed from the tax assessment application to the tax processing server.

Clause 19: The computer-implemented method for metering power consumption of any of the above clauses, the method including securely transferring a Vehicle Identification Number (VIN) to the tax processing server.

Clause 20: The computer-implemented method for metering power consumption of any of the above clauses, where the measuring of voltage and current between an external power charging port of an electrical vehicle and an energy store of the vehicle includes at least one of: measuring charged electrical energy by integrating the voltage over time and multiplying the integrated voltage by the current; and measuring polyphase power by summing the measured energy for each phase of the polyphase power.

Clause 21: The computer-implemented method for metering power consumption of any of the above clauses, the method including: obtaining a measurement of the voltage and current integrated over time to determine data for an amount of energy discharged during power discharging, storing the data for the amount of energy discharged in the memory, and subtracting the amount of energy discharged from the amount of energy consumed.

## Claims

1. A power consumption metering device (100) for a vehicle configured to utilize electrical energy from an external source, the system comprising:

   a power metering circuit (120) configured to be electrically coupled to a main power cable of a vehicle between an external power charging port of the electrical vehicle and an energy store of the vehicle and configured to measure voltage and current on the main power cable from the external source;
   a communications module (140) configured for data communication;
   a controller (120) coupled to the power metering circuit and the communication module, the controller including a processor (820) and a memory (132), the memory having stored therein machine executable instructions that, when executed by the processor, cause the controller to:

      obtain (612) a measurement of the voltage and current from the power metering circuit integrated over time to determine data for an amount of energy consumed during power charging,
      store the data for the amount of energy consumed in the memory,
      using the communications module, establish (620) a communication link with a tax assessment application (210) executing on a client device (200), and

responsive to establishing the communication link with the tax assessment application, transfer (624) the data for the amount of energy consumed to the tax assessment application.

2. The power consumption metering device of claim 1, the memory having further stored therein machine executable instructions that, when executed by the processor, cause the controller to:

periodically monitor (632) the power metering circuit to detect voltage and current on the main power cable, if no voltage and current is detected on the main power cable, store (634) data in memory indicating that no voltage and current was detected with an associated time stamp indicating when no voltage and current was detected, and
the transfer of the data for the amount of energy consumed includes transfer of the data indicating no voltage and current was detected and the associated time stamp to the tax assessment application.

3. The power consumption metering device of claim 2, the memory having further stored therein machine executable instructions that, when executed by the processor, cause the controller to:

responsive to detecting that no voltage and current is detected on the main power cable, determining a presence of a load on the main power cable by causing the power metering circuit to apply (642) a voltage to the main power cable and measure a resulting current on the main power cable,
if no load is detected (644) on the main power cable, store (646) data in memory indicating that no load was detected with an associated time stamp indicating when no load was detected, and
the transfer of the data for the amount of energy consumed includes transfer of the data indicating no load was detected and the associated time stamp to the tax assessment application.

4. The power consumption metering device of claim 1, the device further including a global positioning system module (108) and the memory having further stored therein machine executable instructions that, when executed by the processor, cause the controller to:

when power charging is detected, obtain geolocation data from the global positioning system module, store the geolocation data with the data for the amount of energy consumed in the memory, and
the transfer of the data for the amount of energy consumed includes transfer of the geolocation data along with the data for the amount of energy consumed to the tax assessment application.

5. The power consumption metering device of claim 1, where the client device has a processor, a memory, and a communication module, the client device memory having stored therein machine executable instructions for the tax assessment application that, when executed by the client device processor, cause the client device processor to:

using the client device communications module, establish the communication link to the controller coupled to the power metering circuit;
receive from the controller coupled to the power metering circuit the data for the amount of energy consumed;
using the client device communications module, establish (660) a communication link to a tax processing server; and
transfer (662) the data for the amount of energy consumed to the tax processing server.

6. The power consumption metering device of claim 2, where the power metering circuit is installed in a vehicle and a Vehicle Identification Number (VIN) is stored in the memory of the controller coupled to the power metering circuit and the VIN is transferred to the tax assessment application with the data for the amount of energy consumed.

7. The power consumption metering device of claim 1, where the power metering circuit is configured to measure charged electrical energy by at least one of integrating the voltage on the main power cable over time and multiplying the integrated voltage by the current or measure polyphase power by summing the measured energy for each phase of the polyphase power.

8. The power consumption metering device of claim 1, the memory having stored therein machine executable instructions that, when executed by the processor, cause the controller to:

obtain a measurement of the voltage and current integrated over time to determine data for an amount of energy discharged during power discharging,

store the data for the amount of energy discharged in the memory, and
subtract the amount of energy discharged from the amount of energy consumed.

9. A computer-implemented method (600) for metering power consumption for a vehicle configured to utilize electrical energy from an external source, the method comprising:

measuring (612) voltage and current between an external power charging port of an electrical vehicle and an energy store of the vehicle;
integrating the measured voltage and current over time to determine data for an amount of energy consumed during power charging;
storing the data for the amount of energy consumed;
establishing (620) a communication link with a tax assessment application; and
responsive to establishing the communication link with the tax assessment application, transferring (624) the data for the amount of energy consumed to the tax assessment application.

10. The computer-implemented method for metering power consumption of claim 14, the method including:

periodically monitoring (632) the power metering circuit to detect voltage and current between the external power charging port and the energy store of the vehicle;
if no voltage and current is detected, storing (634) data in memory indicating that no voltage and current was detected with an associated time stamp indicating when no voltage and current was detected; and
the transferring the data for the amount of energy consumed operation includes transferring the data indicating no voltage and current was detected and the associated time stamp to the tax assessment application.

11. The computer-implemented method for metering power consumption of claim 15, the method including:

responsive to detecting that no voltage and current is detected on the main power cable, determining (642) a presence of a load between the external power charging port and the energy store of the vehicle;
if no load is detected, storing (646) data in memory indicating that no load was detected with an associated time stamp indicating when no load was detected; and
the transferring the data for the amount of energy consumed includes transferring the data indicating no load was detected and the associated time stamp to the tax assessment application.

12. The computer-implemented method for metering power consumption of claim 14, the method including:

obtaining geolocation data when power charging is detected;
storing the geolocation data with the data for the amount of energy consumed in the memory; and
the transferring the data for the amount of energy consumed operation includes transferring the geolocation data along with the data for the amount of energy consumed to the tax assessment application.

13. The computer-implemented method for metering power consumption of claim 14, the method including:

receiving the data for the amount of energy consumed in the tax assessment application;
establishing (660) a communication link between the tax assessment application and a tax processing server; and
transferring (662) the data for the amount of energy consumed from the tax assessment application to the tax processing server.

14. The computer-implemented method for metering power consumption of claim 14, where the measuring of voltage and current between an external power charging port of an electrical vehicle and an energy store of the vehicle includes at least one of:

measuring charged electrical energy by integrating the voltage over time and multiplying the integrated voltage by the current; and
measuring polyphase power by summing the measured energy for each phase of the polyphase power.

15. The computer-implemented method for metering power consumption of claim 14, the method including:

obtaining a measurement of the voltage and current integrated over time to determine data for an amount of energy discharged during power discharging,
storing the data for the amount of energy discharged in the memory, and
subtracting the amount of energy discharged from the amount of energy consumed.

Figure 1

*Figure 2*

To Power Metering Device (100)

PAN, using Bluetooth or NFC

To WAN (300)

Mobile Data Network

App 210

*Figure 4*

To Power Metering Device (100)

App 210

Personal Computer

Router, with Wi-Fi access point

Ethernet

*Figure 5*

EP 3 360 721 A1

20

102  200  202  300  302  400

100

14

WAN

TAX server

12

*Figure 3*

Power Metering
Device 100

WiFi
110

200A

200B

Network(s)
300

400

Tax Assessment
Application
500

Electrical
Consumption
Data

ID Info,
Electrical
Consumption
Data

*Figure 6*

*Figure 7*

600

```
                    ┌─────────────────────┐
                    │  Monitor Power Input│
              ┌────▶│         602         │◀────┐
              │     └─────────────────────┘     │
              │                │                 │
              │                ▼                 │
              │            ╱╲                    │
      No      │          ╱    ╲                  │
              │        ╱        ╲                │
              └──────╱  Charging? ╲              │
                     ╲    610    ╱               │
                      ╲        ╱                 │
                        ╲    ╱                   │
                          ╲╱                     │
                          │ Yes                  │
                          ▼                      │
                ┌─────────────────────┐          │
                │  Obtain and Store   │          │
                │  Consumption Data   │          │
                │         612         │          │
                └─────────────────────┘          │
                          │                      │
                          ▼                      │
                ┌─────────────────────┐          │
          ┌────▶│Establish Connection │          │
          │     │  to Tax Assessment  │          │
          │     └─────────────────────┘          │
          │                │                      │
          │                ▼                      │
          │              ╱╲                       │
          │            ╱    ╲                     │
          │          ╱        ╲                   │
          └────────╱ Connection?╲                 │
                   ╲    622    ╱                   │
                    ╲        ╱                     │
                      ╲    ╱                       │
                        ╲╱                         │
                        │                          │
                        ▼                          │
              ┌─────────────────────┐              │
              │      Transfer       │              │
              │  Consumption Data   │──────────────┘
              │         624         │
              └─────────────────────┘
```

*Figure 8*

630

Periodically Monitoring
Voltage and Current on
Power Cable
632

Store Result of
Check with Time
Stamp
634

Voltage/Current
Present?
640

Yes

No

Apply Voltage and
Measure Current
642

Load Detected?

Store Diagnostic Data
with Time stamp
646

Figure 9

650

Monitor for Connection to
Power Metering Device
652

Connection?
654

No

Yes

Obtain
Consumption Data
656

Establish Secure
Connection with Tax
Processing Server
660

Transfer Consumption
Data to Tax Processing
Server
662

*Figure 10*

Figure 11

# EP 3 360 721 A1

Europäisches
Patentamt

European
Patent Office

Office européen
des brevets

# EUROPEAN SEARCH REPORT

**Application Number**

EP 18 15 6019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2009/184689 A1 (KRESSNER A ARTHUR [US] ET AL) 23 July 2009 (2009-07-23)<br>* abstract *<br>* paragraph [0009] - paragraph [0011] *<br>* paragraph [0028] - paragraph [0037] *<br>* paragraph [0039] - paragraph [0062] *<br>* figures * | 1,4-9, 12-15<br>2,3,10, 11 | INV.<br>B60L11/18<br>G07C5/00 |
| X | US 2010/161480 A1 (LITTRELL NATHAN BOWMAN [US]) 24 June 2010 (2010-06-24)<br>* paragraph [0022] - paragraph [0041] *<br>* figures * | 1,2,5-7, 9,10,13 | |
| X | US 2013/082654 A1 (KIM YEONG CHAN [KR] ET AL) 4 April 2013 (2013-04-04)<br>* paragraph [0026] - paragraph [0061] *<br>* figures * | 1,7-9,13 | |
| X,D | US 2009/177580 A1 (LOWENTHAL RICHARD W [US] ET AL) 9 July 2009 (2009-07-09)<br>* paragraph [0043] - paragraph [0069] *<br>* figures 2-6 * | 1,9 | |
| Y<br>A | US 2015/346288 A1 (HARDY WILLIAM H [US] ET AL) 3 December 2015 (2015-12-03)<br>* paragraphs [0061], [0070] *<br>* paragraph [0093] - paragraph [0138] *<br>* figures 8A-12 * | 2,3,10, 11<br>1,9 | TECHNICAL FIELDS SEARCHED (IPC)<br><br>B60L<br>G07C |
| A | US 2014/214218 A1 (ELDRIDGE DAVID AUSTIN [US] ET AL) 31 July 2014 (2014-07-31)<br>* paragraph [0098] - paragraph [0101] * | 8,15 | |

-/--

The present search report has been drawn up for all claims

| Place of search | Date of completion of the search | Examiner |
|---|---|---|
| The Hague | 14 June 2018 | Miltgen, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 15 6019

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/062453 A1 (ERICSSON TELEFON AB L M [SE]; HJELM JOHAN [JP]; LIDSTROEM MATTIAS [SE]) 2 May 2013 (2013-05-02)<br>* page 21, line 17 - page 24, line 13 *<br>* page 27, line 27 - page 29, line 2 *<br>* page 34, line 8 - page 41, line 24 *<br>* figures 1,4,5,6-8 *<br>----- | 2,3,10, 11 | |

TECHNICAL FIELDS
SEARCHED     (IPC)

The present search report has been drawn up for all claims

| Place of search | Date of completion of the search | Examiner |
|---|---|---|
| The Hague | 14 June 2018 | Miltgen, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 6019

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2018

| Patent document cited in search report | | Publication date | Patent family member(s) | | Publication date |
|---|---|---|---|---|---|
| US 2009184689 | A1 | 23-07-2009 | US 2009184689 A1 | | 23-07-2009 |
| | | | US 2010100342 A1 | | 22-04-2010 |
| | | | US 2011153131 A1 | | 23-06-2011 |
| | | | WO 2010101909 A2 | | 10-09-2010 |
| US 2010161480 | A1 | 24-06-2010 | NONE | | |
| US 2013082654 | A1 | 04-04-2013 | CN 103036270 A | | 10-04-2013 |
| | | | EP 2574495 A2 | | 03-04-2013 |
| | | | JP 5744811 B2 | | 08-07-2015 |
| | | | JP 2013081361 A | | 02-05-2013 |
| | | | KR 20130035711 A | | 09-04-2013 |
| | | | US 2013082654 A1 | | 04-04-2013 |
| US 2009177580 | A1 | 09-07-2009 | AU 2009204279 A1 | | 16-07-2009 |
| | | | CN 101946218 A | | 12-01-2011 |
| | | | CN 105034832 A | | 11-11-2015 |
| | | | EP 2243060 A1 | | 27-10-2010 |
| | | | JP 6298016 B2 | | 20-03-2018 |
| | | | JP 2011509648 A | | 24-03-2011 |
| | | | JP 2016021858 A | | 04-02-2016 |
| | | | US 2009177580 A1 | | 09-07-2009 |
| | | | WO 2009089249 A1 | | 16-07-2009 |
| US 2015346288 | A1 | 03-12-2015 | NONE | | |
| US 2014214218 | A1 | 31-07-2014 | CA 2897450 A1 | | 07-08-2014 |
| | | | CN 104956186 A | | 30-09-2015 |
| | | | EP 2951535 A1 | | 09-12-2015 |
| | | | ES 2624875 T3 | | 17-07-2017 |
| | | | US 2014214218 A1 | | 31-07-2014 |
| | | | WO 2014120322 A1 | | 07-08-2014 |
| WO 2013062453 | A1 | 02-05-2013 | EP 2772006 A1 | | 03-09-2014 |
| | | | WO 2013062453 A1 | | 02-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62456750 A

- US 20090177580 A

**Non-patent literature cited in the description**

- **JAMES M. WHITTY.** *Oregon's Mileage Fee Concept and Road User Fee Pilot Program, Final Report,* November 2007